# EUROPÄISCHE PATENTANMELDUNG

(11) **EP 1 316 753 A2**
(43) Veröffentlichungstag der Anmeldung: **04.06.2003**
(21) Anmeldenummer: 02406029.5
(22) Anmeldetag: 27.11.2002
(51) Int. Cl.: F16L 33/207

(54) **Anschlussvorrichtung für wenigstens einen Rohrteil sowie Verfahren zur Herstellung einer Verbindung mit einer solchen Anschlussvorrichtung**

(30) Priorität: 03.12.2001 CH 22062001
(71) Anmelder: GEBERIT TECHNIK AG, 8645 Jona (CH)
(72) Erfinder: Scholz, Jürg, 8841 Gross (CH); Allemann, Rudolf, 8722 Kaltbrunn (CH); Wili, Hansruedi, 8645 Jona (CH)
(74) Vertreter: Groner, Manfred

(57) **Zusammenfassung**

Die Anschlussvorrichtung besitzt einen Fitting (1), der wenigstens einen Anschlussstutzen (14) und einen umlaufenden Wulst (12) aufweist. Eine Hülse (4, 6) ist mit dem umlaufenden Wulst sowie einem Rohrteil (2, 3) verbindbar. Die Hülse (4, 6) weist Befestigungsmittel (16) auf, mit denen die Hülse (4, 6) während der Installation durch Verpressen oder Verschrauben mit dem Fitting (1) verbindbar ist. Die Anschlussvorrichtung ermöglicht eine einfache und sichere Installation.

## Beschreibung

Die Erfindung betrifft eine Anschlussvorrichtung für wenigstens einen Rohrteil, mit einem Fitting, der wenigstens einen Anschlussstutzen und einen umlaufenden Wulst aufweist, mit einer Hülse, die mit dem umlaufenden Wulst sowie mit dem Rohrteil verbindbar ist.

Eine Anschlussvorrichtung der genannten Art ist aus der DE 197 41 641 A bekannt geworden. Die Hülse ist eine Presshülse, die mit dem Fitting vorverbunden ist. Dazu weist die Presshülse an ihrem freien Ende einen ringförmigen Halteansatz auf, der hinter dem Wulst (Ringschulter) des Fittings eingerastet ist. Die Verbindung der Presshülse mit dem Fitting kann auch eine Riegelverbindung sein. Um die Presshülse ohne Werkzeug mit dem Fitting zu verbinden, wird die Presshülse vorübergehend ovalförmig verformt. Bei der Entlastung federt die Presshülse in ihre ursprüngliche runde Form zurück und rastet mit den genannten Halteansätzen am Wulst ein. Erwähnt ist auch die Möglichkeit einer bajonettverschlussartigen Verriegelung der Presshülse mit dem Fitting. Wie erwähnt ist bei dieser Vorrichtung die Presshülse vor dem Aufstecken des Rohrteils auf den Stutzen des Fittings mit diesem verbunden. Nach dem Aufschieben des zu verbindenden Rohrendes auf den Anschlussstutzen des Fittings wird die Presshülse verpresst und damit wird eine unlösbare Verbindung geschaffen.

Die US 4,407,532 offenbart eine Anschlussvorrichtung für einen verstärkten Schlauch und weist ebenfalls ein Fitting auf, an dem eine Presshülse befestigt ist. Die Presshülse ist am Fitting vorverbunden. Dazu ist an der Presshülse am freien Ende eine umlaufende Rippe angeordnet, die radial nach innen in eine umlaufende Nut des Fittings eingerastet ist.

Der Erfindung liegt die Aufgabe zugrunde, eine Anschlussvorrichtung der genannten Art zu schaffen, die einfacher und kostengünstiger herstellbar ist.

Die erfindungsgemässe Anschlussvorrichtung ist dadurch gekennzeichnet, dass die Hülse Befestigungsmittel aufweist, mit denen diese während der Installation durch Verpressen mit dem Fitting verbindbar ist. Bei der erfindungsgemässen Anschlussvorrichtung ist die Hülse nicht vormontiert und wird erst während der Installation, insbesondere während dem Verpressen der Hülse mit dem Fitting verbunden. Die Hülse ist vorzugsweise unverlierbar auf das anzuschliessende Rohrende aufgesteckt.

Nach einer Weiterbildung der Erfindung ist die Hülse eine Presshülse und weist einen Bereich auf, der beim Pressvorgang die Presshülse mit dem Fitting verbindet. Die Montage bzw. Installation ist hier besonders einfach, da die Presshülse mit einem Pressvorgang sowohl mit dem Rohrende als auch mit dem Fitting verbunden wird. Dies ist dann besonders funktionssicher und einfach, wenn die Presshülse durch eine Bördelung mit dem Wulst des Fittings verbunden wird. Dies ergibt eine besonders zuverlässige und kraftschlüssige Verbindung der Presshülse mit dem Fitting.

Nach einer Weiterbildung der Erfindung ist die Hülse eine Steckhülse. Diese weist nach einer Weiterbildung der Erfindung einen Spannring auf, der zur Fixierung der Spannhülse über das freie Ende der Steckhülse zu schieben ist. Der Spannring weist nach einer Weiterbildung der Erfindung einen Anschlag an der Stirnseite des Rohrteils auf und ist so angeordnet, dass er beim vollständigen Einschieben des Rohrendes in die Steckhülse in die Spannposition verschoben wird. Dadurch ergibt sich eine Sichtkontrolle für die korrekte Einstecktiefe des Rohrendes.

Die Erfindung betrifft zudem ein Verfahren zum Herstellen einer Verbindung mit einer genannten Anschlussvorrichtung. Bei diesem ist die Hülse mit dem anzuschliessenden Rohrende vorverbunden. Das Rohrende wird mit der aufgeschobenen Hülse auf den Fitting aufgeschoben. Anschliessend wird die Hülse mit dem Fitting und mit dem Rohrende unter Deformation des Rohrendes verbunden. Nach einer Weiterbildung des Verfahrens wird ein Presswerkzeug verwendet, mit dem eine Pressverbindung zwischen dem Rohrende und dem Fitting hergestellt wird und bei dem gleichzeitig die Hülse durch Bördelung mit dem Fitting verbunden wird.

Weitere vorteilhafte Merkmale ergeben sich aus den abhängigen Patentansprüchen, der nachfolgenden Beschreibung sowie der Zeichnung.

Zwei Ausführungsbeispiele der Erfindung werden nachfolgend anhand der Zeichnung näher erläutert. Es zeigen:
- Figur 1: ein Schnitt durch eine erfindungsgemässe Anschlussvorrichtung und ein angesetztes Presswerkzeug, wobei die obere Hälfte den unverpressten Zustand und die untere Hälfte den verpressten Zustand zeigt,
- Figur 2: ein Schnitt durch eine Presshülse
- Figur 3: eine Ansicht der Presshülse in Richtung des Pfeils III der Figur 2.

Die Figur zeigt zwei Rohrteile 2 und 3, die plastisch verformbar sind und vorzugsweise mehrschichtig sind und jeweils eine ebene Stirnfläche 10 aufweisen. Auf die Rohrteile 2 und 3 ist jeweils eine Presshülse 4 bzw. 6 unverlierbar aufgesetzt, die aus einem plastisch verformbaren Metall, insbesondere aus Blech, hergestellt ist. Die Presshülsen 4 und 6 sind hier zwei Varianten einer solchen Presshülse, die entsprechend mit unterschiedlichen Presswerkzeugen 5 bzw. 5' verpresst werden. Die beiden Rohrteile 2 und 3 sind jeweils auf einen Anschlussstutzen 14 eines Fittings 1 aufgeschoben, der aus Metall oder einem geeigneten Kunststoff hergestellt ist. Zwischen den beiden Anschlussstutzen 14 weist der Fitting 1 mittig eine Führungsnut 11 für ein Führungsteil 20 des Presswerkzeuges 5 bzw. 5' sowie zwei Wülste 12 auf.

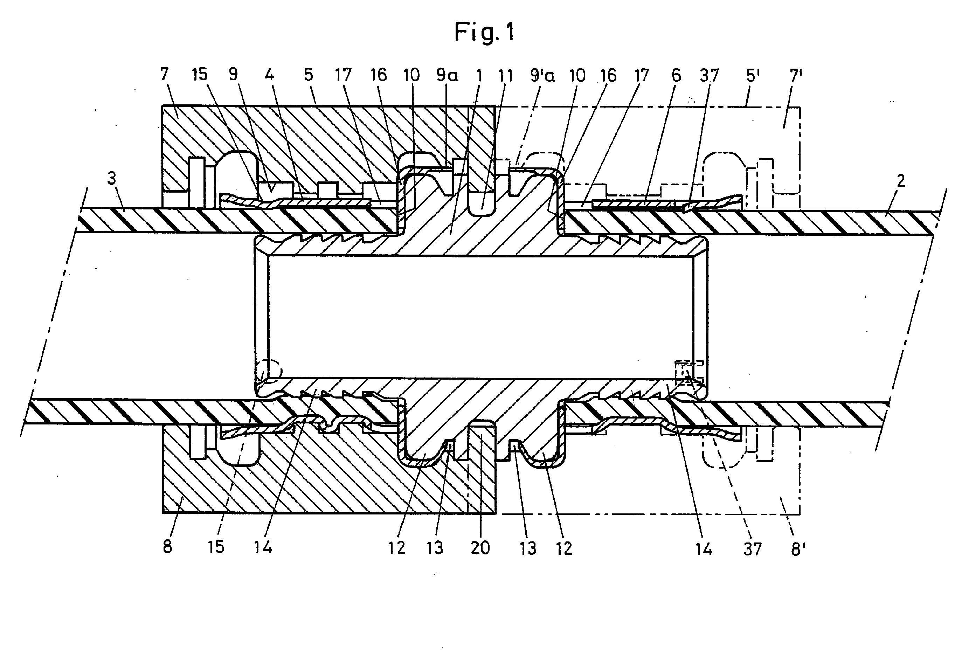

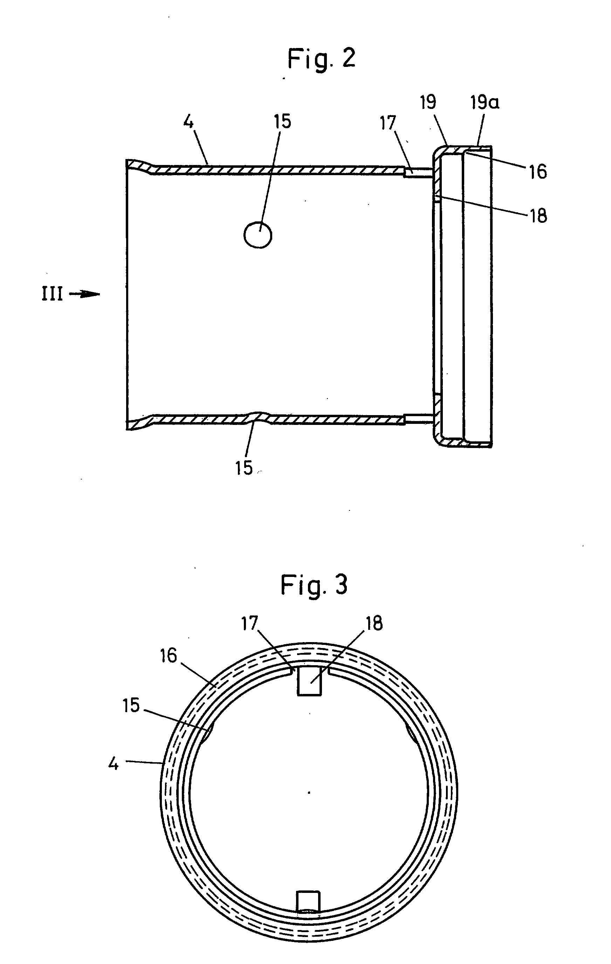

Die beiden Wülste 12 dienen jeweils zur Verankerung einer Presshülse 4 bzw. 6. Dazu weisen diese Presshülsen 4 bzw. 6 jeweils am freien Ende gemäss den Figuren 2 und 3 eine Erweiterung 16 auf, die eine umlaufende, achsparallele sowie zylindrische Wandung 19 besitzt, welche jeweils über einen Wulst 12 schiebbar ist, wie die Figur 1 zeigt.

Die Wandung 19 weist an einem freien Ende eine Wandung 19a mit verminderter Wandstärke auf. Rückseitig sind an der Erweiterung 16 zwei abgebogene Lappen 18 angeordnet, die zur Bildung jeweils eines Fensters 17 aus dem Körper der Presshülse 4 ausgeschnitten und etwa rechtwinklig abgebogen sind. Diese Lappen 18 sind gemäss Figur 3 diametral gegenüberliegend angeordnet und erstrecken sich radial nach innen. Grundsätzlich ist auch eine Ausführung mit lediglich einem oder mit mehreren Lappen 18 denkbar.

Die Presshülse 4 weist zudem im Abstand zur Erweiterung 16 drei nach innen gerichtete Vorsprünge 15 auf, die gemäss Figur 3 in gleichem Abstand zueinander angeordnet sind. Diese Vorsprünge dienen zur Fixierung der Hülse 4 auf dem Rohrteil 3, wenn dieses auf diesem Rohrteil 3 vormontiert ist. Hierbei bilden die Lappen 18 einen Anschlag an der Stirnseite 10 des Rohrteiles 3.

Die Presshülse 6 weist zu Ihrer Befestigung auf dem Rohrteil 2 wenigstens einen nach innen gerichteten Lappen 37 auf, der sich in die Aussenseite des Rohrteils 2 eingräbt und damit die Presshülse 6 im vormontierten Zustand auf dem Rohrteil 2 fixiert. Auch hier bilden die Lappen 18 einen Anschlag an der internen Stirnseite 10.

Zum Herstellen der Pressverbindung werden die Rohrteile 2 und 3 mit den vormontierten Presshülsen 4 bzw. 6 gemäss Figur 1 auf den Fitting 12 aufgesteckt. Die Erweiterungen 16 übergreifen wie ersichtlich jeweils einen Wulst 12. Die Bereiche 19a liegen hierbei jeweils über einer umlaufenden Vertiefung 13. Das Verpressen der Presshülse 4 bzw. 6 erfolgt mit dem Presswerkzeug 5 bzw. 5', das jeweils zwei gegeneinander bewegliche Pressbacken 7 und 8 bzw. 7' und 8' aufweist. Solche Presserkzeuge 5 bzw. 5' sind dem Fachmann gut bekannt und sind als handbetätigbare Presszangen oder hydraulisch angetriebene Presswerkzeuge bekannt. Beim Verpressen wird mit einer Profilierung 9 bzw. 9' die Presshülse 4 bzw. 6 deformiert. Gleichzeitig wird im Bereich des Anschlussstutzens 14 auch der Rohrteil 2 bzw. 3 deformiert, so dass sich eine dichte und unlösbare Verbindung ergibt. Die Profilierung 9 ist mit einem ringförmigen Ansatz 9a versehen, der gemäss Figur 1 im Bereich 19a angeordnet ist und der korrespondierend zur Vertiefung 13 ausgebildet ist. Beim Verpressen wird der Bereich 19a gebördelt und um einen Wulst 12 gelegt, wie dies in Figur 1 gezeigt ist. Das Bördeln des Bereiches 19a erfolgt gleichzeitig mit dem Verpressen des übrigen Bereiches der Hülse 4 sowie des Rohrteils 3. Ein gleicher Vorsprung 9'a ist beim Presswerkzeug 5' vorgesehen. Nach dem Schliessen der Pressbacken 7 und 8 bzw. 7' und 8' ist der Pressvorgang beendet und die Rohrteile 2 und 3 sind fest sowie dicht mit dem Fitting 12 verbunden. Ein wesentlicher Vorteil einer solchen Verbindung besteht darin, dass ein Dichtungsring nicht erforderlich ist. Aufgrund der Spannung der verpressten Hülsen 4 und 6 kann die Verbindung auch bei Temperaturschwankungen nicht undicht werden. Durch die Verankerung der Hülsen 4 und 6 am Fitting 12 ergibt sich zudem eine besonders feste Verbindung.

Mit dem Fitting 12 werden zwei Rohrteile 2 und 3 mittels einer Pressverbindung fixiert. Denkbar ist aber auch eine Ausführung, bei welcher der Fitting 12 lediglich einen Anschlussstutzen 14 für eine Pressverbindung aufweist. Ein anderer Stutzen kann beispielsweise für eine Verschraubung oder eine Steckverbindung vorgesehen sein. Es sind auch Fittinge denkbar, die mehr als zwei Anschlussstellen besitzen.

Die oben genannten Fenster 17 sind so angeordnet, dass sie sich bis zur Stirnseite 10 erstrecken. An diesen Fenstern 17 ist ersichtlich, ob die Stirnfläche 10 wie erforderlich an den Lappen 18 anliegt. Eine nicht korrekte Positionierung einer Hülse 4 bzw. 6 auf einem Rohrteil 2 bzw. 3 ist sofort an einem der Fenster 17 ersichtlich. Ein Überprüfen der korrekten Positionierung ist somit visuell in einfacher Weise möglich. Eine Korrektur ist ohne weiteres durch ein vollständiges Aufschieben der Presshülse 4 bzw. 6 auf den Rohrteil 2 bzw. 3 möglich. Damit ist sichergestellt, dass in jedem Fall eine korrekt aufgeschobene Hülse 4 bzw. 6 verpresst wird.

## Patentansprüche

1. Anschlussvorrichtung für wenigstens einen Rohrteil (2, 3), mit einem Fitting (1), der wenigstens einen Anschlussstutzen (14) und einen umlaufenden Wulst (12) aufweist, mit wenigstens einer Hülse (4, 6), die mit dem umlaufenden Wulst sowie einem Rohrteil (2, 3) verbindbar ist, **dadurch gekennzeichnet, dass** die Hülse (4, 6) Befestigungsmittel (16) aufweist, mit denen die Hülse (4, 6) während der Installation durch Verpressen mit dem Fitting (1) verbindbar ist.

2. Anschlussvorrichtung nach Anspruch 1, **dadurch gekennzeichnet, dass** die Hülse (4, 6) eine Presshülse ist und dass beim Pressvorgang die Hülse (4, 6) mit dem Fitting (1) verbunden wird.

3. Anschlussvorrichtung nach Anspruch 2, **dadurch gekennzeichnet, dass** die Hülse (4, 6) eine Aufweitung (16) aufweist, die durch Bördelung beim Pressvorgang mit dem umlaufenden Wulst (12) verbunden wird.

4. Anschlussvorrichtung nach Anspruch 1, **dadurch gekennzeichnet, dass** die Aufweitung (16) eine umlaufende und im wesentlichen zylindrische Wandung (19) aufweist, die im wesentlichen so breit ist wie der umlaufende Wulst (12).

5. Anschlussvorrichtung nach Anspruch 3 oder 4, **dadurch gekennzeichnet, dass** die Aufweitung (16) einen zu bördelnden Bereich (19a) aufweist, deren Wandstärke kleiner ist, als die übrige Wandstärke der Hülse (4, 6).

6. Anschlussvorrichtung nach einem der Ansprüche 2 bis 5, **dadurch gekennzeichnet, dass** die Hülse (4, 6) wenigstens ein Sichtfenster (17) aufweist, das durch Einschneiden und Umbiegen eines Wandbereiches (18) gebildet ist, wobei dieser Wandbereich (18) einen Anschlag an einer Stirnfläche (10) des Rohrteils (2, 3) bildet.

7. Verfahren zur Herstellung einer Verbindung mit einer Anschlussvorrichtung gemäss Anspruch 1, **dadurch gekennzeichnet, dass** bei der Installation die Hülse (4, 6) auf das Rohrteil 2, 3) aufgeschoben wird und das anzuschliessende Rohrende mit der aufgeschobenen Hülse (4, 6) auf einen Anschlussstutzen (14) des Fittings (1) aufgeschoben wird und dass anschliessend das Rohrteil (2, 3) und die Hülse (4, 6) am Fitting (1) durch Verpressen oder Verschrauben befestigt werden.

8. Verfahren nach Anspruch 7, **dadurch gekennzeichnet, dass** die Hülse (4, 5) mit einem Presswerkzeug (5, 5') verpresst wird und dass hierbei gleichzeitig ein aufgeweiteter Teil (16) der Hülse (4, 5) durch Bördelung am Fitting (1) verankert wird.
